# EUROPEAN PATENT SPECIFICATION

(11) **EP 3 257 570 B1**
(45) Date of publication and mention of the grant of the patent: **20.03.2019**
(21) Application number: 17173328.0
(22) Date of filing: 29.05.2017
(51) Int. Cl.: B01D 53/75, B01D 61/42, B01D 53/50, B01D 53/62, C25B 9/10, B01D 53/96

(54) **INTEGRATED DESULFURIZATION AND CARBON DIOXIDE CAPTURE SYSTEM FOR FLUE GASES**
INTEGRIERTES ENTSCHWEFELUNGS- UND KOHLENSTOFFDIOXIDABSCHEIDUNGSSYSTEM FÜR RAUCHGASE
DÉSULFURATION INTÉGRÉE ET SYSTÈME DE CAPTURE DE DIOXYDE DE CARBONE DES GAZ DE COMBUSTION

(30) Priority: 13.06.2016 US 201615180781
(43) Date of publication of application: 20.12.2017
(73) Proprietor: General Electric Technology GmbH, 5400 Baden (CH)
(72) Inventor: DUBE, Sanjay Kumar, Knoxville, Tennessee 37931 (US)
(74) Representative: General Electric Technology GmbH

(56) References cited:
- EP-A1- 2 907 563
- EP-A1- 3 075 430
- WO-A1-2009/056830
- US-B1- 9 174 165

## Description

### TECHNICAL FIELD

This disclosure generally relates to an integrated desulfurization and carbon dioxide capture system. In particular, this disclosure generally relates to an integrated desulfurization and carbon dioxide capture for flue gases.

### BACKGROUND

Power generation systems (e.g., coal-fired and oil fired power plants) generally combust hydrocarbon based fuels in order to generate energy. Such systems generally produce an end product that comprises primarily carbon dioxide and water (e.g., steam) as by-products of the energy generation process. In most cases, the end products will also include varying amounts of nitrogen, oxygen, sulfur dioxide and other compounds.

Environmental pollution stemming from fossil-fueled power plants is of worldwide concern. Power plants emit air pollutants that may be toxic, e. g., toxic metals and polyaromatic hydrocarbons; precursors to acid rain, e.g., sulfur oxides (SOₓ) such as sulfur dioxide (SO₂), and nitrogen oxides (NOₓ); precursors to ozone such as NO₂ and reactive organic gases; particulate matter; and greenhouse gases, notably carbon dioxide (CO₂). Power plants also discharge potentially harmful effluents into surface and ground water, and generate considerable amounts of solid wastes, some of which may be hazardous.

Generally, removal of contaminants involves equipment and processes to remove sulfur-type pollutants (e.g., flue gas desulfurization) and then separate equipment and processes are used to remove and capture the carbon dioxide-type pollutants.

Carbon dioxide capture systems include pre-combustion (e.g., oxy-combustion) or post-combustion systems (e.g., chilled ammonia process (CAP) and advanced amines process (AAP)). The post combustion carbon dioxide capture processes are detailed here.

Post-combustion carbon dioxide capture can be applied to various types of power plants such as coal, gas and biomass fired ones, as well as a vast range of industrial processes emitting carbon dioxide. Post combustion carbon dioxide capture technology generally includes a chemical absorption process. The following discussion includes the chilled ammonia process.

Sulfur dioxide (SO₂) is an acid gas, and, therefore, the typical sorbent slurries or other materials used to remove the SO₂ from the flue gases are alkaline. Sulfur dioxide capture systems include the use of flue gas desulfurization units. Flue gas desulfurization systems include either wet flue gas desulfurization system (Wet FGD) or dry flue gas desulfurization systems (Dry FGD). In wet FGD, flue gas is reacted with a reagent under saturated conditions. In dry FGD the flue gas is reacted with a reagent at a temperature 16,6 - 27 °C (°30-50 degrees F) above adiabatic saturation.

The reaction taking place in wet scrubbing using a CaCO₃ (limestone) slurry produces CaSO₃ (calcium sulfite) and can be expressed as:

CaCO₃ (solid) + SO₂ (gas) → CaSO₃ (solid) + CO₂ (gas)

When wet scrubbing with a Ca(OH)₂ (lime) slurry, the reaction also produces CaSO₃ (calcium sulfite) and can be expressed as:

Ca(OH)₂ (solid) + SO₂ (gas) → CaSO₃ (solid) + H₂O (liquid)

When wet scrubbing with a Mg(OH)₂ (magnesium hydroxide) slurry, the reaction produces MgSO₃ (magnesium sulfite) and can be expressed as:

Mg(OH)₂ (solid) + SO₂ (gas) → MgSO₃ (solid) + H₂O (liquid)

To partially offset the cost of the flue gas desulfurization installation, in some designs, the CaSO₃ (calcium sulfite) is further oxidized to produce marketable CaSO₄.2H₂O (gypsum). This technique is also known as forced oxidation:

CaSO₃ (solid) + H₂O (liquid) + ½O₂ (gas) → CaSO₄ (solid) + H₂O

Other systems used for capturing SOₓ use sodium carbonate. Sodium based desulfurization systems are more efficient than the lime or limestone based systems. As seen above, lime is a calcium-containing inorganic material in which carbonates, oxides and hydroxides predominate and may be used in lieu of sodium carbonate. Wet lime or limestone based processes also represent a popular way to capture CO₂, SOₓ, and other acidic gases.

The capital cost of a sodium based system is significantly lower than the lime/limestone based system. However, the cost of the sodium based reagents are much higher than the lime or limestone reagents and hence sodium based desulfurization system has found less attention than its counterpart lime/limestone based desulfurization processes.

The use of separate desulfurization systems and carbon dioxide capture systems in a combustion facility is expensive and adds to maintenance costs. It is therefore desirable to reduce costs and improve efficiencies for both the desulfurization process and the carbon capture processes such as chilled ammonia process.

With this integration of the two systems, sodium reagents are used for the utilization for SOx re-capture and recycle of ammonia for CO2 capture and also, sulfuric acid for ammonia capture. This significantly reduces the operating cost of the process. Features related to the subject-matter of the independent claims are known from EP 3 075 430 A1 and WO 2009/056830 A1.

### SUMMARY

Disclosed herein is an integrated system for capturing carbon dioxide and sulfur oxides from a flue gas stream according to claim 1.

Disclosed herein too is a method comprising charging a flue gas stream produced in a combustion process to an integrated system for capturing carbon dioxide and sulfur oxides from the flue gas stream according to claim 7.

### BRIEF DESCRIPTION OF THE DRAWINGS

Figure 1 represents an exemplary diagram that depicts a chilled ammonia carbon dioxide capture system;
Figure 2 is a depiction of an exemplary integrated system for capturing sulfur oxides and carbon dioxide from a flue gas stream; (not part of the invention)
Figure 3 is a depiction of an exemplary integrated system for capturing sulfur oxides and carbon dioxide from a flue gas stream; and
Figure 4 is a depiction of another exemplary integrated system for capturing sulfur oxides and carbon dioxide from a flue gas stream.

### DETAILED DESCRIPTION

Disclosed herein is a system and a method for facilitating the integration of a desulfurization process based on a sodium reagent with the chilled ammonia process. The method comprises discharging a flue gas from a combustion process (such as from a coal combustion furnace) to a desulfurization chamber where sulfur oxides (SOₓ) is removed in the form of a sulfate salt. The flue gases now devoid of the sulfur oxides (or with a reduced sulfur oxide content as compared with the incoming flue gas stream) are then discharged to a carbon capture system where the carbon dioxide present in the flue gas stream is removed in the form of a carbonate salt and/or a bicarbonate salt. The carbonate salt and/or the bicarbonate salt is then decomposed to release carbon dioxide. The carbon dioxide is eventually sequestered while the flue gas now devoid of carbon dioxide and sulfur oxides (SOₓ) is released to the atmosphere via a stack.

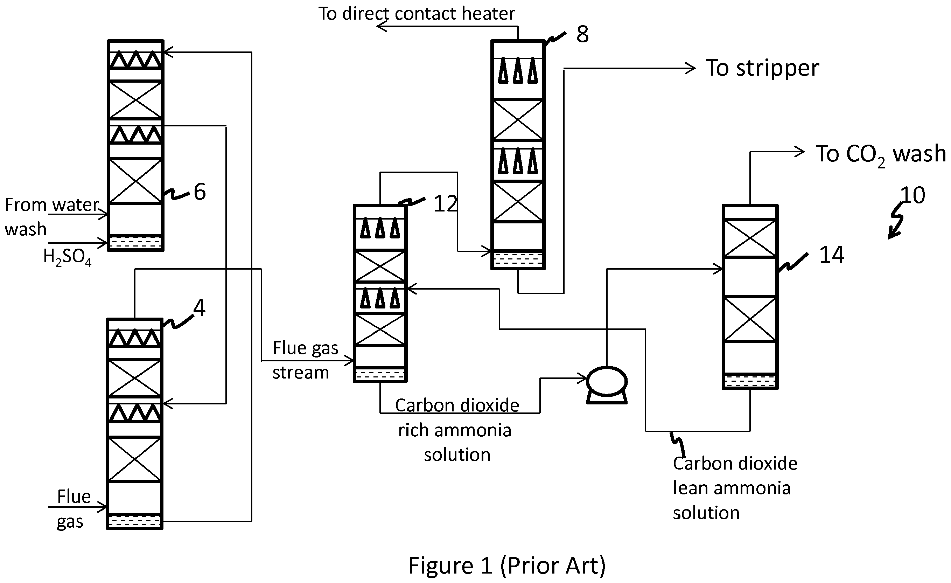

Figure 1 represents an exemplary diagram that depicts a chilled ammonia carbon dioxide capture system 10 for the removal of carbon dioxide from a flue gas stream. It should be noted that the process shown in Figure 1 is only a high level overview of the the bicarbonate salt is then decomposed to release carbon dioxide. The carbon dioxide is eventually sequestered while the flue gas now devoid of carbon dioxide and sulfur oxides (SOₓ) is released to the atmosphere via a stack.

Figure 1 represents an exemplary diagram that depicts a chilled ammonia carbon dioxide capture system 10 for the removal of carbon dioxide from a flue gas stream. It should be noted that the process shown in Figure 1 is only a high level overview of the Chilled Ammonia Process (CAP) and not all details associated with the CAP process are shown.

The system 10 comprises a direct contact cooling vessel (DCC) 4, a direct contact heating vessel (DCH) 6, a water wash station 8, an absorber 12 and a regenerator 14. A flue gas stream containing carbon dioxide that emanates from a combustion process (e.g., a boiler) is charged to a direct contact cooling vessel 4 prior to being charged to the absorber 12.

The direct contact cooling vessel 4 reduces temperature of the incoming flue gas stream and removes residual acidic gases such as SOx and particulate matter. The flue gas stream is then charged to the absorber 12 where carbon dioxide is removed using an absorbent solution (also referred to herein as an ammoniated solution or an ammoniated slurry). The absorption of the acidic components such as carbon dioxide present in the flue gas stream is achieved when the absorber 12 is operated at a low temperature, for example, between zero and thirty degrees Celsius (0 to 30°C). In another example, absorption of the acidic component from flue gas stream is achieved when the absorber is operated at a temperature between zero and ten degrees Celsius (0 to 10°C). By operating at relatively low temperatures, ammonia loss within the system 10 is minimized.

By way of example in the absorber 12, the ammonia reacts with the carbon dioxide present in the flue gas to form ammonium carbonate, ammonium bicarbonate, ammonium carbamate (also referred to as a carbon dioxide rich ammonia solution). The carbon dioxide rich ammonia solution is charged to the regenerator 14 where it is heated to release the carbon dioxide thereby resulting in a carbon dioxide lean ammonia solution. The carbon dioxide is subsequently cleaned and sequestered or stored for further utilization. The carbon dioxide lean ammonia solution is recycled back to the absorber 12, where it recaptures additional carbon dioxide in a sequential portion of the flue gas stream.

In one method of functioning of the chilled ammonia process, the flue gas stream from a boiler enters the direct contact cooling vessel 4 to have its temperature reduced and to have residual acidic gases removed from it. The direct contact cooling vessel 4 uses ambient air or cooling water to lower the recirculation liquid temperature. Flue gas enters the direct contact cooling vessel 4 inlet at the bottom and flows upward through the packing (not shown). Cool water is sprayed at the top of the packing and flows downward, counter to the flue gas flow. As the gas flows upward through direct contact cooling vessel 4, it is forced into contact with the water. Direct cooling of the saturated flue gas results in the condensation of most of the water in the flue gas stream. In addition, the residual acidic gases (e.g., SO₂, SO₃, SOₓ, hydrogen chloride, and hydrogen fluoride gas) and particulates present in the flue gas are removed in the direct contact cooling vessel 4. In particular, the sulfur dioxide (SO₂) is captured by the ammonia to produce ammonium sulfate.

The flue gases leave the direct contact cooling vessel 4 and are charged to the absorber 12.

The absorber 12 employs an absorbent solution (disposed therein) or a slurry that facilitates the absorption and the removal of a gaseous component such as carbon dioxide from the flue gas stream. In the chilled ammonia process, the absorbent solution used in the absorber is a solution or slurry including ammonia (referred to above as an ammoniated solution or slurry). The ammonia can be in the form of an ammonium ion (NH₄⁺), ammonium carbamate, ammonium bicarbonate, or in the form of dissolved molecular ammonia (NH₃). By way of example, the absorbent solution or slurry may be comprised of ammonium carbonate, carbamate and bicarbonate ions. As the flue gas flows upwards through the absorber 12, it is contacted with the scrubbing slurry solution containing dissolved ammonium carbonate and ammonium bicarbonate suspended solids that flow in a countercurrent direction to the flue gas, and the CO₂ is absorbed.

The flue gas exits the water wash column and enters the direct contact heating vessel 6 for removal of residual ammonia where it is captured by sulfuric acid to form ammonium sulfate before entering the chimney as clean combustion gas. The flue gas exits the carbon dioxide absorber 12 and enters a water wash station 8 to reduce the ammonia vapor from the flue gas. In the water wash station 8, ammonia is removed using chilled water..

The water wash station 8 is a packed column that utilizes water to absorb ammonia from the flue gas. The temperature of the flue gas is maintained using heat exchangers and a mechanical chilling system. The ammoniated water is sent to a stripper column (not shown) (CO₂/NH₃ stripper) where the ammonia is stripped and returned to the process as reagent. The clean water from the CO₂/NH₃ stripper is re-used within the water wash column to remove additional ammonia. Energy for the CO₂/NH₃ stripping column is provided by steam from the power generation facility.

The ammoniated solution or ammoniated slurry (now rich in carbon dioxide in the form of ammonium carbonate or ammonium bicarbonate) is charged to a regenerator 14 where it is heated to decompose it thereby producing carbon dioxide and the absorbent solution. The absorbent solution is returned to the absorber 12 to contact additional flue gas and to absorb carbon dioxide from it. The remainder of the flue gas stream (now substantially devoid of carbon dioxide) is then charged to a water wash station 8 to remove ammonia from it.

The regenerator 14 is a stripper column that contains a mass transfer process. The feed to the regenerator 14 is introduced at several stages. The carbon dioxide rich ammonia solution is flashed by heat introduced in the regenerator reboiler. Flashed carbon dioxide in the feed proceeds up the column to the overhead. As the rich solution falls through the lower regenerator bed, carbon dioxide is separated and rises to the regenerator overhead, and the solution becomes leaner as it reaches the bottom of the column. The lean solution is then returned to the absorber 12 for re-use.

The carbon dioxide exits the top of the regeneration column and flows to a receiver at the top of the regenerator to condense residual moisture and ammonia. At these conditions, there is a significant difference in the vapor pressure between carbon dioxide and ammonia and water. Because of this difference, a very low concentration of water vapor and ammonia are present in the regenerator overhead. The carbon dioxide product stream enters the carbon dioxide compressor, which compresses the stream to a pressure of 1500 psia (103 bar) or as required by the end user.

Disclosed herein too is an integrated system for removing sulfur oxides (SOₓ) and carbon dioxide from a flue gas stream. The integrated system comprises a desulfurization system that may comprise either a wet flue gas desulfurization (WFGD) system and/or a dry flue gas desulfurization system (DFGD) to remove sulfur oxides (SOₓ) and a carbon capture system (CCS) that captures carbon dioxide from the flue gas stream. The desulfurization system comprises a desulfurization chamber where a carbonate or bicarbonate salt is used to capture SOₓ from the flue gas stream and gets converted to a sulfate salt in the process. The flue gas stream now substantially devoid of sulfur oxides is charged to the carbon capture system where the carbon dioxides are captured.

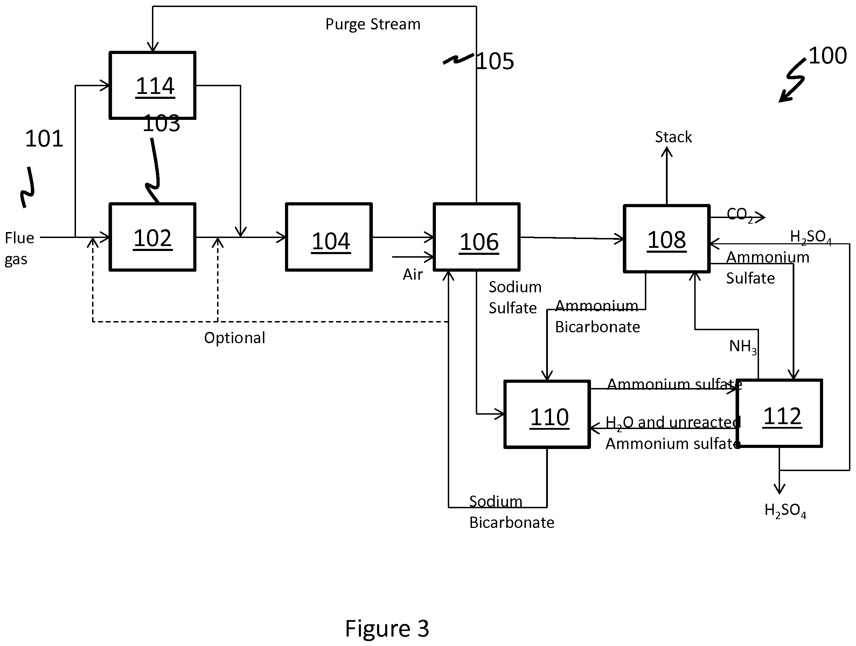

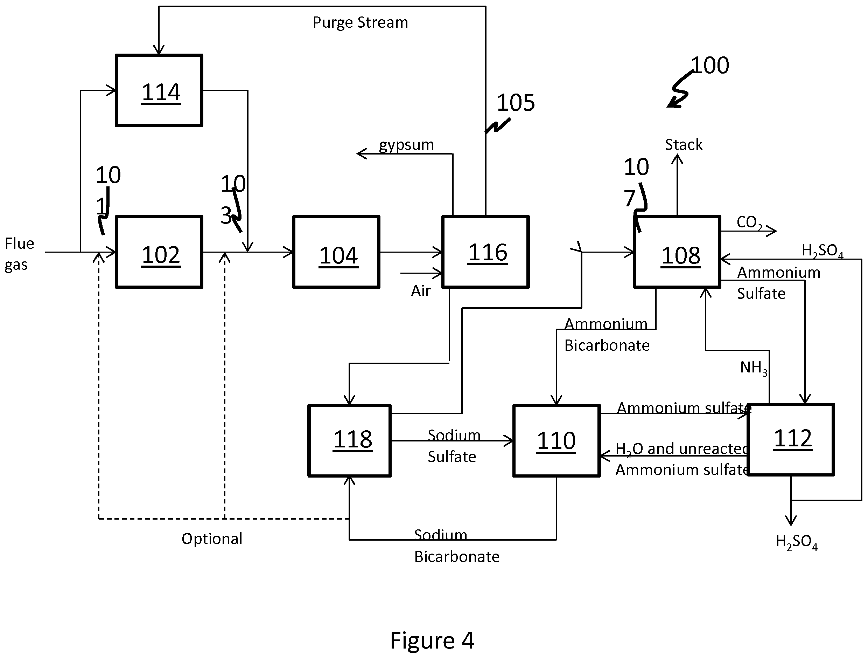

Figures 3 and 4 depict embodiments of integrated systems 100 that may be used for removing both sulfur oxides and carbon dioxide from a flue gas stream. The systems of Figures 3 and 4 employ a number of common processes, as described herein.

### Air-Preheater 102, Bag-house 104 and Spray Drier 114:

Flue gas from a combustion process is discharged to an air-preheater 102 that is in fluid communication with a desulfurization chamber 116 via a bag-house 104.

The bag-house 104 facilitates the removal of particulate matter (e.g., fly ash particles and the like) prior to the flue gases entering the desulfurization chamber 106.

A spray drier 114 disposed in parallel with the air-preheater 102 is used to dry a small amount of purge material taken out of the desulfurization chamber 106 as a part of zero liquid discharge from the process.

### Desulfurization Chamber 106

The desulfurization chamber 106 may be a wet gas desulfurization chamber or a dry gas desulfurization chamber. A variety of different salts may be used in the desulfurization chamber 106 to remove sulfur oxides (SOx) from the flue gas stream. Preferred salts for use in the desulfurization chamber 106 are carbonates, bicarbonates, oxides and/or hydroxides of metals of Group IA and IIA. These include alkali metals and alkaline earth metals. Examples of suitable salts for use in the desulfurization chamber are salts such as sodium bicarbonate, potassium bicarbonate, calcium carbonate, calcium oxide, calcium hydroxide, magnesium carbonate, strontium carbonate, and the like. A preferred bicarbonate salt for use in the desulfurization chamber 106 is sodium bicarbonate.

The resulting salts produced in the desulfurization chamber 106 as a result of the reaction with the sulfur oxides (SOx from the flue gas stream) are sulfates of alkali metals and alkaline earth metals. Exemplary sulfates are sodium sulfate, potassium sulfate, calcium sulfate, magnesium sulfate, strontium sulfate, and the like

A flue gas stream (from the combustion process) along with a stream of air is introduced into the desulfurization chamber 106. The air provides the oxygen that is used to convert the sulfite salt to a sulfate salt. A bicarbonate salt is also introduced into the chamber 106 from the product reactor and separator 110.

In the desulfurization chamber 106, the bicarbonate salt reacts with the sulfur oxides present in the flue gas stream to form a sulfate salt. For sodium bicarbonate, the reaction (2) is as follows.

2NaHCO₃ + SO₂ + ½O₂ → Na₂SO₄ + H₂O + 2CO₂ (2)

The sulfate salt (e.g., sodium sulfate) is then charged to the product reactor and separator 110. An exemplary salt is sodium sulfate.

### Chilled Ammonia Process 108

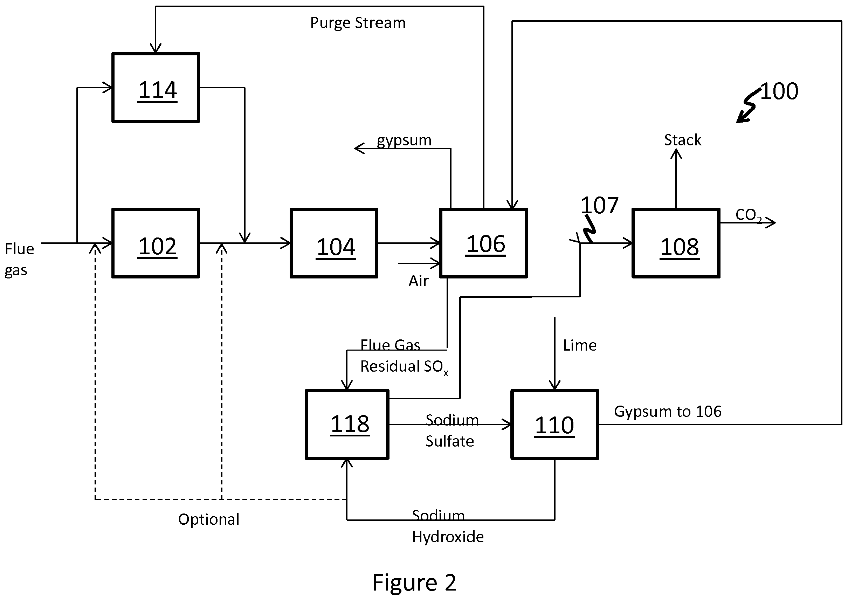

While the chilled ammonia process comprises a number of different components (such as an absorber, a regenerator, a direct contact cooling vessel, a direct contact heating vessel, a water wash station and a CO₂ wash as shown in the Figure 1) Figures 2 through 4 represent the entire chilled ammonia process by reference numeral 108.

In the chilled ammonia process 108, carbon dioxide is absorbed from the flue gas stream by an absorbent present in an absorber (not shown). The absorbent with the carbon dioxide dissolved therein (termed a carbon dioxide-rich solution) is then discharged from the absorber to a regenerator where the carbon dioxide is separated from the absorbent to form a carbon-dioxide-rich stream and a carbon dioxide-lean stream.

The carbon dioxide-rich stream is then sequestered or utilized.

The absorbent now devoid of carbon dioxide (termed a carbon dioxide lean ammonia solution) is recycled back to the absorber to absorb additional carbon dioxide from the incoming flue gas stream.

Details of the chilled ammonia process are discussed above and as well as detailed in several patents namely U.S. Patent No. 8,690,992B2 to Dube et al., and US 7,862,788 to Gal et al.

### Product Reactor and Separator 110

The product reactor and separator 110 receives ammonium bicarbonate from the chilled ammonia process 108 and reacts it with the sulfate salt to produce ammonium sulfate and the bicarbonate salt. This reaction for sodium sulfate is detailed as shown in reaction (1) above and is reproduced again below.

Na₂SO₄ + 2NH₄HCO₃ → 2NaHCO₃ + (NH₄)₂SO₄ (1)

The reaction between the sulfate salt and the ammonium bicarbonate results in the formation of a sodium bicarbonate salt and ammonium sulfate solution.

The sodium bicarbonate is recycled to the desulfurization chamber 106 while the ammonium sulfate is discharged to the bipolar membrane electrodialysis and then decomposed into ammonia and sulfuric acid both of which are recycled to the chilled ammonia process.

The ammonia is used as a reagent make-up required in the CO2 absorption process and sulfuric acid is used as an absorbent to remove ammonia in the DCH unit to minimize the ammonia slip from the flue gas before it is discharged to the atmosphere.

### Bipolar Membrane Electrodialysis Device 112

The bipolar membrane electrodialysis device 112 facilitates the decomposition of ammonium sulfate into sulfuric acid and ammonia. The ammonia is charged to the chilled ammonia device 108 and is recycled to the absorber (see Figure 1) where it absorbs carbon dioxide to form ammonium carbonate/bicarbonate solution. A portion of the sulfuric acid is also charged to the chilled ammonia process 108 where it is used in the DCH () to convert ammonia slip to ammonium sulfate. The remaining sulfuric acid may be used for other commercial purposes. The ammonium sulfate obtained from the DCC/DCH is fed back to the electrodialysis device 112, where it is decomposed to ammonia and to sulfuric acid in a manner similar to the ammonium sulfate received from the product reactor and separator 110. Any water obtained from the decomposition of ammonium sulfate and any non-decomposed ammonium sulfate produced in the electrodialysis device 112 is returned to the product reactor and separator 110.

The bipolar membrane electrodialysis device 112 generally includes an anion exchange membrane and a cation exchange membrane physically or chemically bonded together. Under the driving force of an electrical field, the bipolar membrane dissociates water into hydrogen and hydroxyl ions.

There are substantial advantages to water splitting with the bipolar membrane. Since there are no gases evolved at the surface or within the bipolar membranes, the energy associated with conversion of oxygen and hydrogen is saved. The ions generated in the electro dialysis device pass though anion and cation exchange perm-selective membranes to react with the aqueous alkali and/or alkaline earth metal sulfur salt solution to produce the corresponding acid (e.g., sulfuric acid, sulfurous acid) and a regenerated ammonia feed stream. The acid containing feed stream can then be circulated to the chilled ammonia device along with the ammonia. This method advantageously reduces the operating cost of CAP significantly.

Additionally, the electrodialysis device eliminates the need for the end user to handle the byproduct stream that would typically be generated using an ammonia solution (i.e., the ammonium sulfate), which will further enhance the efficiency of the chilled ammonia process. Details of the functioning of the bipolar membrane electrodialysis device 112 are disclosed in U.S. Patent Publication No. 20130064748 A1 to Dube.

### Direct Contact Cooling Vessel 118

Flue gas containing residual SOx is directed from the desulfurization chamber 106 to the direct contact cooling vessel 118. The direct contact cooling vessel 118 lies downstream of the desulfurization chamber 116. The direct contact cooling vessel 118 lies upstream of the product reactor and separator 110.

In the direct contact cooling vessel 118, sodium hydroxide solution is charged to the top of the vessel while the flu gas containing residual SOx is charged to the bottom of the reactor. The flue gas travels from the bottom upwards counter current to the flow of the sodium hydroxide solution. The SOx present in the flue gas stream is absorbed by the sodium hydroxide to form sodium sulfate which is charged to the product reactor and separator 110. The flue gas (now devoid of SOx) is charged to the carbon capture system 108. Gypsum from the direct contact cooling vessel 118 is fed to the desulfurization chamber 106.

In Figure 2, the product reactor and separator 110 is fed with lime to convert the sodium sulfate to gypsum, which is charged to the wet flue gas desulfurization chamber 106. The sodium sulfate produced in direct contact cooling vessel 118 is charged to the product reactor and separator 110 to produce gypsum and sodium hydroxide. The gypsum is recycled to the wet flue gas desulfurization chamber 106. Sodium hydroxide produced in the product reactor and separator 110 as a result of the reaction between the lime and the sodium sulfate is recycled to the direct contact cooling vessel 118.

As shown in the Figure 2, the carbon dioxide obtained from the carbon capture system 108 can then be sequestered or utilized. The system of the Figure 2 thus integrates desulfurization of the flue gas stream with carbon dioxide removal. The lime and/or limestone present in the wet flue gas desulfurization chamber 106 reacts with the sulfur oxides (SOx) in the flue gas stream to produce gypsum (CaSO₄.2H₂O). The gypsum may be removed from the flue gas desulfurization chamber 116 and replaced with additional lime and/or limestone to facilitate the further removal of sulfur oxides from the flue gas stream.

Figure 3 is a depiction of an exemplary integrated system 100 that combines desulfurization with the chilled ammonia process to remove sulfur oxides and carbon dioxide from the flue gas stream.

As seen in the Figure 3, a product reactor and separator 110 is used to facilitate the reaction between the sodium sulfate salt (from the desulfurization chamber 106) and ammonium bicarbonate (from the chilled ammonia process 108). This reaction is detailed below in (1):

Na₂SO₄ + 2NH₄HCO₃ → 2NaHCO₃ + (NH₄)₂SO₄ (1)

The reaction between the sulfate salt and the ammonium bicarbonate results in the formation of a sodium bicarbonate salt and ammonium sulfate solution. The sodium bicarbonate is recycled to the desulfurization chamber while the ammonium sulfate is decomposed into ammonia and sulfuric acid both of which are recycled to the chilled ammonia process. The ammonia is used as a reagent make-up required in the CO2 absorption process and sulfuric acid is used as an absorbent to remove ammonia in the DCH unit to minimize the ammonia slip from the flue gas before it is discharged to the atmosphere. This is discussed in detail in the sections directed to the product reactor and separator 110 and the desulfurization chamber 106.

As noted above, the reaction produces a sodium bicarbonate salt and ammonium sulfate solution. A sodium bicarbonate salt is precipitated and separated from the mixture and ammonium sulfate solution is sent to a bipolar membrane electrodialysis unit. A bipolar membrane electrodialysis unit 112 is used to decompose the ammonium sulfate to ammonia & sulfuric acid which is fed back to the chilled ammonia process. Sulfuric acid is removed from the bipolar membrane electrodialysis unit 112 and a portion of it is fed to the chilled ammonia process.

From the Figure 3, it may be seen that the product reactor and separator 110 lies in a cyclical loop with the chilled ammonia process 108 and the desulfurization chamber 106. In this loop, flue gases (now devoid of sulfur oxides) from the desulfurization chamber 106 are charged to the absorber (not shown) of the chilled ammonia process 108. A small portion of the ammonium bicarbonate from the absorber is then discharged from the absorber to the product reactor and separator 110, where it reacts with the sulfate salt to produce a bicarbonate salt, which is charged to the desulfurization chamber 106.

There also exists a recycle loop between the desulfurization chamber 106 and the product reactor and separator 110. The sulfate salt from the desulfurization chamber 106 is charged to the product reactor and separator 110 and the bicarbonate salt from the product reactor and separator 110 is charged to the desulfurization chamber 106.

A number of recycle loops also exist between the product reactor and separator 110, the bipolar membrane electrodialysis unit 112 and the chilled ammonia process 108. In one recycle loop, ammonium sulfate from the product reactor and separator 110 is charged to the bipolar membrane electrodialysis unit 112 while water and unreacted ammonium sulfate are recycled back to the product reactor and separator 110 from the bipolar membrane electrodialysis unit 112.

Another recycle loop exists between the chilled ammonia process 108 and the bipolar membrane electrodialysis unit 112 where ammonium sulfate from the chilled ammonia process 108 is fed to the bipolar membrane electrodialysis unit 112 and where ammonia and sulfuric acid produced in the bipolar membrane electrodialysis unit 112 are recycled to the chilled ammonia process 108.

In one embodiment, in one manner of using the system 100 of the Figure 3, the sodium bicarbonate reacts with sulfur oxides present in the flue gas stream in the desulfurization chamber 106 to produce sodium sulfate. The sodium sulfate is charged to the product reactor and separator 110 where a portion of ammonium bicarbonate is received from the absorber (not shown) of the chilled ammonia process 108. The reaction between sodium sulfate and ammonium bicarbonate results in the formation of ammonium sulfate and sodium bicarbonate. The sodium bicarbonate is recycled to the desulfurization chamber 106 where it reacts with incoming sulfur oxides in the flue gas stream. The sodium bicarbonate is thus charged from the product reactor and separator 110 to the desulfurization chamber 106 while sodium sulfate is charged from the desulfurization chamber 106 to product reactor and separator 110.

The bipolar membrane electrodialysis device 112 receives the ammonium sulfate from the product reactor and separator 110 and decomposes it to ammonia and sulfuric acid. The ammonia is charged to the absorber of the chilled ammonia process 108 where it forms ammonium bicarbonate. A portion of sulfuric acid generated in the bipolar membrane electrodialysis device 112 is charged to the chilled ammonia process 108 where it reacts with the ammonia slip in the DCH to produce ammonium sulfate. This ammonium sulfate is charged to the bipolar membrane electrodialysis device 112 from the chilled ammonia process 108 where it is decomposed to form ammonia and sulfuric acid. Any water or unused ammonium sulfate from the bipolar membrane electrodialysis device 112 are discharged to the product reactor and separator 110.

In an embodiment, a portion of sodium bicarbonate may be diverted from being charged to the desulfurization chamber 106 (from the product reactor and separator 110) to points 101 and 103 upstream and downstream of the air preheater 102 where it can be used to absorb a small portion of sulfur oxides (SOx) from the incoming flue gas stream At points 101 and 103, the temperature of the flue gas stream is higher than when it enters the desulfurization chamber 106 and hence the removal of sulfur oxides (especially SO₃) from the flue gas stream is more efficient.

In another embodiment, a small purge stream 105 is charged from the desulfurization chamber 106 to the spray dryer 114 where heat from the flue gas stream is used to dry the contents of the purge stream.

The Figure 4 depicts another embodiment of the exemplary integrated system 100 that combines sulfur oxide removal with carbon dioxide removal from a flue gas stream once again with the use of the chilled ammonia process.

In the embodiment depicted in the Figure 4, the system 100 comprises a wet flue gas desulfurization and/or a dry flue gas desulfurization chamber 116 (hereinafter and a direct contact cooling vessel 118 in addition to the components contained in the system 100 depicted in the Figure 3).

In this embodiment, the flue gas desulfurization chamber 106 of the Figure 3 is replaced with a wet flue gas desulfurization chamber 106 that contains lime (CaO or Ca(OH)₂) or limestone (CaCO₃). The wet flue gas desulfurization chamber 106 lies upstream of a direct contact cooling vessel 118.

Wet flue gas desulfurization systems are detailed in U.S. Patent Publication No. 2013/0064748. The flue gas exiting the flue gas desulfurization unit is typically at a temperature of about 50 to 60°C for wet flue gas desulfurization systems and about 80 to 100°C for dry flue gas desulfurization systems (see the desulfurization chamber 106 of the Figure 3). The gas is water saturated for systems that employ wet flue gas desulfurization systems whereas for systems with upstream dry flue gas desulfurization, the gas has temperature that is approximately 11,1 - 23,23 °C (20 - 40°F) above moisture saturation and each gas stream typically contains residual contaminants including SOx, among others. In order to cool the saturated gas, both sensible heat and latent heat for water vapor condensation has to be removed. To accomplish this, the flue gas is fed to a direct contact cooling tower vessel (DCC) 118 to reduce the temperature of the flue gas and to further remove contaminants such as SOx.

The remaining flue gas from the wet flue gas desulfurization chamber 116 is then charged to the direct contact cooling vessel 118 where any residual sulfur oxides are removed. The direct contact cooling vessel 118 may be a packed tower with liquid recirculation through a cooling tower having multiple stages that uses ambient air to lower the recirculation liquid temperature. An alkali and/or alkaline earth metal hydroxide reagent such as sodium hydroxide is introduced into a first stage of the direct contact cooling vessel 118 and mixed with cooling water at a bottom portion of the direct contact cooling vessel 118. Details of the operation of the direct contact cooling vessel 118 are provided in U.S. Patent Publication No. 2013/0064748.

In an embodiment, the aqueous alkali and/or alkaline earth metal hydroxide solution is pumped via pump (not shown) through a conduit (not shown) to a top portion of the direct contact cooling vessel 118. Optionally, the aqueous alkali and/or alkaline earth metal hydroxide solution may first be pumped to a chiller (not shown) to further lower the temperature of the aqueous alkali and/or alkaline earth metal hydroxide solution. Flue gas enters the direct contact cooling vessel 118 inlet at the bottom portion and flows upward.

The cool aqueous alkali and/or alkaline earth metal hydroxide solution is sprayed at the top of the packing and flows downwards, counter to the flue gas flow. As the flue gas flows upwards through direct contact cooling vessel 118, the flue gas is forced into contact with the aqueous alkali and/or alkaline earth metal hydroxide solution. Direct cooling of the saturated flue gas in subsequent stages results in the condensation of most of the water in the flue gas stream. In addition to reaction of SOx, the residual gases present in the flue gas are generally rendered water soluble. Moreover, any SOx contaminants entrained in the flue gas react with the aqueous alkali and/or alkaline earth The sodium sulfate from the direct contact cooling vessel 118 is then discharged to the product reactor and separator 110 where it reacts with ammonium bicarbonate to produce ammonium sulfate and sodium bicarbonate as detailed in the Figure 3 above. The flue gas stream now substantially devoid of SOx is charged to the chilled ammonia process 108 via stream 107. The remainder of the system of the Figure 4 functions as detailed above with reference to the Figure 3 and will not be detailed again in the interests of brevity.

The system of the Figure 4 is useful in that it is useful for retrofitting existing systems that have carbon capture processes already installed based on Chilled Ammonia process. They are useful where regulations for the desulfurization system are not stringent

It will be understood that when an element or layer is referred to as being "on," "interposed," "disposed," or "between" another element or layer, it can be directly on, interposed, disposed, or between the other element or layer or intervening elements or layers may be present.

It will be understood that, although the terms first, second, third, and the like may be used herein to describe various elements, components, regions, layers and/or sections, these elements, components, regions, layers and/or sections should not be limited by these terms. These terms are only used to distinguish one element, component, region, layer or section from another element, component, region, layer or section. Thus, first element, component, region, layer or section discussed below could be termed second element, component, region, layer or section without departing from the teachings of the present invention.

As used herein, the singular forms "a," "an" and "the" are intended to comprise the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

Unless otherwise defined, all terms (including technical and scientific terms) used herein have the same meaning as commonly understood by one of ordinary skill in the art to which this invention belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

Furthermore, in describing the arrangement of components in embodiments of the present disclosure, the terms "upstream" and "downstream" are used. These terms have their ordinary meaning. For example, an "upstream" device as used herein refers to a device producing a fluid output stream that is fed to a "downstream" device. Moreover, the "downstream" device is the device receiving the output from the "upstream" device. However, it will be apparent to those skilled in the art that a device may be both "upstream" and "downstream" of the same device in certain configurations, e.g., a system comprising a recycle loop.

## Claims

1. An integrated system (100) for capturing carbon dioxide and sulfur oxides from a flue gas stream comprising:
a desulfurization chamber (106, 116) comprising at least one of a metal oxide, a metal hydroxide, a metal carbonate salt and/or a metal bicarbonate salt; where a metal in the metal salt is either an alkali metal or an alkaline earth metal; where the metal oxide, the metal hydroxide, the metal carbonate salt and/or the metal bicarbonate salt is used to absorb sulfur oxides from the flue gas stream to form a metal sulfate; and
a carbon capture system in fluid communication with the desulfurization chamber (106, 116); where the carbon capture system is operative to absorb carbon dioxide from the SOx-lean flue gas stream from the desulfurization chamber, **characterized in that** the carbon capture system comprises a chilled ammonia process (108), and **in that** the system (100) further comprises a product reactor and separator (110), configured to receive ammonium bicarbonate salt from the chilled ammonia process (108) and metal sulfate from the desulfurization chamber (106, 116).

2. The integrated system (100) of Claim 1, further comprising a bipolar membrane electrodialysis unit (112) configured to receive ammonium sulfate from the product reactor and separator (110) and to dissociate it into ammonia and sulfuric acid.

3. The integrated system (100) of Claim 2, configured to feed ammonia to an absorber (12) in the chilled ammonia process (108) and to feed the sulfuric acid to a direct contact heating vessel to treat the ammonia slip.

4. The integrated system (100) of any one of Claims 1 to 3, where the desulfurization chamber (106, 116) can be a wet flue gas desulfurization system or a dry flue gas desulfurization system.

5. The integrated system (100) of Claim 3 or 4, further comprising a direct contact cooling vessel (4, 118) that receives a flue gas stream from the wet flue gas desulfurization system, where the direct contact cooling vessel (4, 118) is operative to remove sulfur oxides from the flue gas stream and transport the flue gas stream now substantially devoid of sulfur oxides to the chilled ammonia process (108).

6. The integrated system (100) of any one of Claims 1 to 5, comprising means to introduce a portion of the metal oxide, the metal hydroxide, the metal carbonate salt and/or the metal bicarbonate salt to contact the flue gas stream at points upstream or downstream of an air preheater (102) that is upstream and in fluid communication with a desulfurization chamber 116 via a bag-house 104.

7. A method comprising:
charging a flue gas stream produced in a combustion process to an integrated system (100) for capturing carbon dioxide and sulfur oxides from the flue gas stream; removing SOx in the desulfurization chamber (106, 116) comprising at least one of a metal oxide, a metal hydroxide, a metal carbonate salt and/or a metal bicarbonate salt; where a metal in the metal salt is either an alkali metal or an alkaline earth metal to provide a SOx-lean flue gas; and
providing the SOx-lean flue gas to the carbon capture system comprising a chilled ammonia process (108) in fluid communication with the desulfurization chamber (106, 116); absorbing sulfur oxides from the flue gas stream in the desulfurization chamber (106,116); and
absorbing carbon dioxide from the flue gas stream in the chilled ammonia process (108), **characterized in that** the method further comprises
converting the metal oxide, the metal hydroxide, the metal carbonate salt and/or the metal bicarbonate salt into a metal sulfate salt in the desulfurization chamber (106, 116), and
reacting in a product reactor and separator (110) the metal sulfate salt with ammonium bicarbonate produced in the chilled ammonia process (108) to produce a metal bicarbonate and ammonium sulfate.

8. The method of Claim 7, **characterized in that** the bicarbonate salt is ammonium bicarbonate.

9. The method of Claim 7, **characterized in that** the desulfurization chamber is a wet flue gas desulfurization system which uses lime or limestone, sodium carbonate, sodium bicarbonate, sodium hydroxide, or a combination thereof to capture sulfur oxides from the flue gas stream.

10. The method of Claim 7, **characterized in that** the desulfurization chamber is a dry flue gas desulfurization system which uses sodium bicarbonate to capture sulfur oxides from the flue gas stream.

## Patentansprüche

1. Integriertes System (100) zum Erfassen von Kohlenstoffdioxid und Schwefeloxiden aus einem Rauchgasstrom, umfassend:
eine Entschwefelungskammer (106, 116), umfassend mindestens eines von einem Metalloxid, einem Metallhydroxid, einem Metallcarbonatsalz und/oder einem Metallbicarbonatsalz; wobei ein Metall im Metallsalz entweder ein Alkalimetall oder ein Erdalkalimetall ist; wobei das Metalloxid, das Metallhydroxid, das Metallcarbonatsalz und/oder das Metallbicarbonatsalz verwendet wird, um Schwefeloxide aus dem Rauchgasstrom zu absorbieren, um ein Metallsulfat zu bilden; und
ein Kohlenstofferfassungssystem in Fluidkommunikation mit der Entschwefelungskammer (106, 116); wobei das Kohlenstofferfassungssystem betriebsbereit ist, um Kohlenstoffdioxid aus dem SOₓ-armen Rauchgasstrom aus der Entschwefelungskammer zu absorbieren, **dadurch gekennzeichnet, dass**
das Kohlenstofferfassungssystem einen gekühlten Ammoniakprozess (108) umfasst, und dadurch, dass
das System (100) weiter einen Produktreaktor und -separator (110) umfasst, die konfiguriert sind, um Ammoniumbicarbonatsalz vom gekühlten Ammoniakprozess (108) und Metallsulfat aus der Entschwefelungskammer (106, 116) aufzunehmen.

2. Integriertes System (100) nach Anspruch 1, weiter umfassend eine bipolare Membranelektrodialyseeinheit (112), die konfiguriert ist, um Ammoniumsulfat aus dem Produktreaktor und -separator (110) aufzunehmen und es in Ammoniak und Schwefelsäure zu dissoziieren.

3. Integriertes System (100) nach Anspruch 2, das konfiguriert ist, um einem Absorber (12) im gekühlten Ammoniakprozess (108) Ammoniak zuzuführen und einem Direktkontaktheizbehälter die Schwefelsäure zuzuführen, um den Ammoniakschlupf zu verarbeiten.

4. Integriertes System (100) nach einem der Ansprüche 1 bis 3, wobei die Entschwefelungskammer (106, 116) ein Nassrauchgasentschwefelungssystem oder ein Trockenrauchgasentschwefelungssystem sein kann.

5. Integriertes System (100) nach Anspruch 3 oder 4, weiter umfassend einen Direktkontaktkühlbehälter (4, 118), der einen Rauchgasstrom von dem Nassrauchgasentschwefelungssystem aufnimmt, wobei der Direktkontaktkühlbehälter (4, 118) betriebsbereit ist, um Schwefeloxide aus dem Rauchgasstrom zu entfernen und den Rauchgasstrom, der nun im Wesentlichen frei von Schwefeloxiden ist, zum gekühlten Ammoniakprozess (108) zu transportieren.

6. Integriertes System (100) nach einem der Ansprüche 1 bis 5, umfassend Mittel zum Einführen eines Abschnitts des Metalloxids, des Metallhydroxids, des Metallcarbonatsalzes und/oder des Metallbicarbonatsalzes, um den Rauchgasstrom an Punkten stromaufwärts oder stromabwärts eines Luftvorwärmers (102) zu kontaktieren, der stromaufwärts liegt und in Fluidkommunikation mit einer Entschwefelungskammer (116) über einen Beutelfilter (104) steht.

7. Verfahren, umfassend:
Einspeisen eines Rauchgasstroms, der in einem Verbrennungsprozess hergestellt wird, in ein integriertes System (100) zum Erfassen von Kohlenstoffdioxid und Schwefeloxiden aus dem Rauchgasstrom;
Entfernen von SOₓ in der Entschwefelungskammer (106, 116), umfassend mindestens eines von einem Metalloxid, einem Metallhydroxid, einem Metallcarbonatsalz und/oder einem Metallbicarbonatsalz; wobei ein Metall im Metallsalz entweder ein Alkalimetall oder ein Erdalkalimetall ist, um ein SOₓ-armes Rauchgas bereitzustellen; und
Bereitstellen des SOₓ-armen Rauchgases an das Kohlenstofferfassungssystem, umfassend einen gekühlten Ammoniakprozess (108) in Fluidkommunikation mit der Entschwefelungskammer (106, 116);
Absorbieren von Schwefeloxiden aus dem Rauchgasstrom in der Entschwefelungskammer (106, 116); und
Absorbieren von Kohlenstoffdioxid aus dem Rauchgasstrom im gekühlten Ammoniakprozess (108), **dadurch gekennzeichnet, dass** das Verfahren weiter umfasst
Umwandeln des Metalloxids, des Metallhydroxids, des Metallcarbonatsalzes und/oder des Metallbicarbonatsalzes in ein Metallsulfatsalz in der Entschwefelungskammer (106, 116), und
Reagieren in einem Produktreaktor und -separator (110) des Metallsulfatsalzes mit Ammoniumbicarbonat, das im gekühlten Ammoniakprozess (108) hergestellt wird, um ein Metallbicarbonat und Ammoniumsulfat herzustellen.

8. Verfahren nach Anspruch 7, **dadurch gekennzeichnet, dass** das Bicarbonatsalz Ammoniumbicarbonat ist.

9. Verfahren nach Anspruch 7, **dadurch gekennzeichnet, dass** die Entschwefelungskammer ein Nassrauchgasentschwefelungssystem ist, das Kalk oder Kalkstein, Natriumcarbonat, Natriumbicarbonat, Natriumhydroxid oder eine Kombination davon verwendet, um Schwefeloxide aus dem Rauchgasstrom zu erfassen.

10. Verfahren nach Anspruch 7, **dadurch gekennzeichnet, dass** die Entschwefelungskammer ein Trockenrauchgasentschwefelungssystem ist, das Natriumbicarbonat verwendet, um Schwefeloxide aus dem Rauchgasstrom zu erfassen.

## Revendications

1. Système intégré (100) pour capturer du dioxyde de carbone et des oxydes de soufre d'un courant de gaz de fumée, comprenant :
une chambre de désulfuration (106, 116) comprenant au moins l'un d'un oxyde de métal, d'un hydroxyde de métal, d'un sel de carbonate de métal et/ou d'un sel de bicarbonate de métal ; dans lequel un métal du sel de métal est un métal alcalin ou un métal alcalino-terreux ; dans lequel l'oxyde de métal , l'hydroxyde de métal, le sel de carbonate de métal et/ou le sel de bicarbonate de métal est ou sont utilisés pour absorber les oxydes de soufre du courant de gaz de fumée afin de former un sulfate de métal ; et
un système de capture de carbone en communication fluidique avec la chambre de désulfuration (106, 116) ; dans lequel le système de capture de carbone est à même d'absorber le dioxyde de carbone du courant de gaz de fumée pauvre en SOₓ venant de la chambre de désulfuration; **caractérisé en ce que** le système de capture de carbone comprend un processus à l'ammoniac réfrigéré (108) ; et le système (100) comprend en outre un réacteur et un séparateur de produit (110),
configuré pour recevoir un sel de bicarbonate d'ammonium du processus à l'ammoniac réfrigéré (108) et du sulfate de métal de la chambre de désulfuration (106, 116).

2. Système intégré (100) selon la revendication 1, comprenant en outre une unité d'électrodialyse à membrane bipolaire (112) configurée pour recevoir du sulfate d'ammonium du réacteur et séparateur de produit (110) et le dissocier en ammoniac et en acide sulfurique.

3. Système intégré (100) selon la revendication 2, configuré pour fournir de l'ammoniac à un absorbeur (12) dans le processus à l'ammoniac réfrigéré (108) et fournir l'acide sulfurique à une cuve de chauffage par contact direct pour traiter les rejets d'ammoniac.

4. Système intégré (100) selon l'une quelconque des revendications 1 à 3, dans lequel la chambre de désulfuration (106, 116) peut être un système de désulfuration de gaz de fumée humide ou un système de désulfuration de gaz de fumée sec.

5. Système intégré (100) selon la revendication 3 ou 4, comprenant en outre une cuve de refroidissement à contact direct (4, 118) qui reçoit un courant de gaz de fumée du système de désulfuration de gaz de fumée humide, dans lequel la cuve de refroidissement à contact direct (4, 118) est à même d'éliminer les oxydes de soufre du courant de gaz de fumée et d'acheminer le courant de gaz de fumée à présent sensiblement dépourvu d'oxydes de soufre au processus à l'ammoniac réfrigéré (108).

6. Système intégré (100) selon l'une quelconque des revendications 1 à 5, comprenant des moyens pour introduire une partie de l'oxyde de métal, de l'hydroxyde de métal, du sel de carbonate de métal et/ou du sel de bicarbonate de métal pour les mettre en contact avec le courant de gaz de fumée en des points situés en amont ou en aval du préchauffeur d'air (102) qui est en amont et en communication fluidique avec une chambre de désulfuration (116) via un dépoussiéreur (104).

7. Procédé comprenant :
le chargement d'un courant de gaz de fumée produit dans un processus de combustion d'un système intégré (100) pour capturer du dioxyde de carbone et des oxydes de soufre du courant de gaz de fumée ;
l'élimination de SOₓ de la chambre de désulfuration (106, 116) comprenant au moins l'un d'un oxyde de métal, d'un hydroxyde de métal, d'un sel de carbonate de métal et/ou d'un sel de bicarbonate de métal ; dans lequel un métal du sel de métal est un métal alcalin ou un métal alcalino-terreux pour fournir un gaz de fumée pauvre en SOₓ ; et
la fourniture du gaz de fumée pauvre en SOₓ au système de capture de carbone comprenant un processus à l'ammoniac réfrigéré (108) en communication fluidique avec la chambre de désulfuration (106, 116) ;
l'absorption d'oxydes de soufre du courant de gaz de fumée dans la chambre de désulfuration (106, 116) ; et
l'absorption de dioxyde de carbone du courant de gaz de fumée dans le processus à l'ammoniac réfrigéré (108),
**caractérisé en ce que** le procédé comprend en outre
la conversion de l'oxyde de métal, de l'hydroxyde de métal, du sel de carbonate de métal et/ou du sel de bicarbonate de métal en un sel de sulfate de métal dans la chambre de désulfuration (106, 116) et
la réaction dans un réacteur et séparateur de produit (110) du sel de sulfate de métal avec du bicarbonate d'ammonium produit dans le processus à l'ammoniac réfrigéré (108) pour produit un bicarbonate de métal et un sulfate d'ammonium.

8. Procédé selon la revendication 7, **caractérisé en ce que** le sel de bicarbonate est le bicarbonate d'ammonium.

9. Procédé selon la revendication 7, **caractérisé en ce que** la chambre de désulfuration est un système de désulfuration de gaz de fumée humide qui utilise de la chaux ou du calcaire, du carbonate de sodium, du bicarbonate de sodium, de l'hydroxyde de sodium ou une de leurs combinaisons pour capturer des oxydes de soufre du courant de gaz de fumée.

10. Procédé selon la revendication 7, **caractérisé en ce que** la chambre de désulfuration est un système de désulfuration de gaz de fumée sec qui utilise du bicarbonate de sodium pour capturer des oxydes de soufre du courant de gaz de fumée.
